# EUROPEAN PATENT SPECIFICATION

(11) **EP 1 177 131 B1**
(45) Date of publication and mention of the grant of the patent: **03.09.2003**
(21) Application number: 99964703.5
(22) Date of filing: 22.12.1999
(51) Int. Cl.: B65B 11/04, A01F 15/07

(54) **A FILM PRE-STRETCHER FOR AN AGRICULTURAL BALE WRAPPER**
FOLIENDEHNVORRICHTUNG FÜR EINE LANDWIRTSCHAFTLICHE UMWICKELVORRICHTUNG
PRETENDEUR DE FILM POUR UNITE D'EMBALLAGE DE BALLES UTILISEE EN AGRICULTURE

(30) Priority: 23.12.1998 FI 982782
(43) Date of publication of application: 06.02.2002
(73) Proprietor: Oy El-Ho Ab, 68910 Bennäs (FI)
(72) Inventor: HÄGGBLOM, Karl-Erik, FIN-67600 Karleby (FI); FORSEN, Peter, FIN-68920 Forsby (FI)
(74) Representative: Niemi, Hakan
(86) International application number: FI9901068
(87) International publication number: WO00038990

(56) References cited:
- EP-A1- 0 246 659
- CH-A- 456 933
- FR-A1- 2 579 577
- US-A- 4 458 767
- US-A- 4 767 578

## Description

A film pre-stretcher for an agricultural bale wrapper where the stretch rollers are connected with a transmission unit, which determine the peripheral speed relationship between the rollers in such a way that the peripheral speed of the roller situated downstream along the path of the film is always higher than the peripheral speed of the upstream roller and where the film, when it is pulled through the pre-stretcher, will be stretched in at least two pre-stretch zones that are clearly separated from each other.

Wrapping of bales, particularly round bales, for silage has strongly increased during the last years particularly due to the flexibility of the system and the low labour requirement. The working method used most frequently today is such that one person and one tractor first drive the round baler and produce the bales to be wrapped. After this another person and another tractor to which a bale wrapper is connected follow. This unit wraps the bales in plastic to prevent penetration of air into the bale and in this way enable the process of lactic acid fermentation. To keep the oxygen of the outside air effectively away from the bale, it is most important that the film is evenly pre-stretched before it is tensioned around the bale, and that the film is applied as evenly as possible over the surface of the bale.

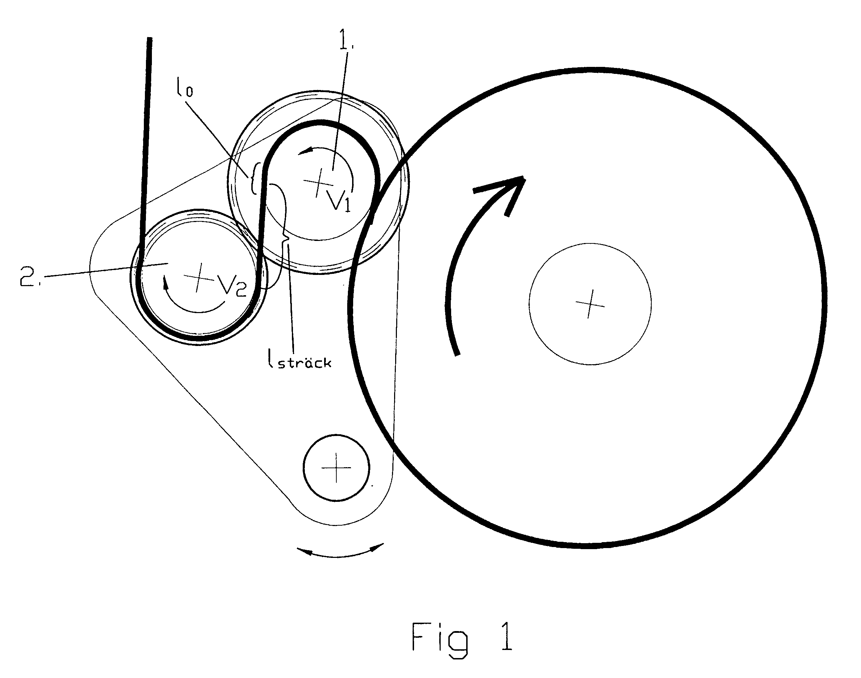

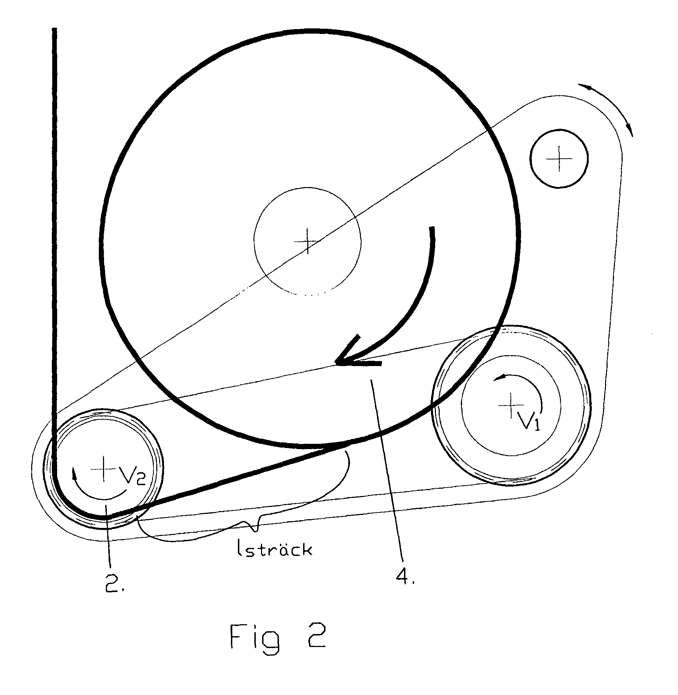

Until now all of the pre-stretchers used on bale wrappers have in general followed the principles shown in e.g. US 4,302,920 where the film is stretched between two rollers (1 & 2) which rotate at different speeds. See Fig 1. The pre-stretch is here determined by the peripheral speed difference between the first and the second roller. An almost similar stretcher is shown in US 4,841,716. See Fig 2. The difference is that in this the film is stretched between the film roll 4 and the stretch roller 2, whereby the film pre-stretch rate is determined by the ratio between the peripheral speed of the stretch roller 2 and the film roller 4.

Other known solutions are shown in for example GB-A 968 594 and US -A 050 221, which both show how the film can be stretched between two rollers which are rotating at different speeds.

In all of the above-mentioned types of pre-stretchers, the film is stretched in one stage and the stretching zone is limited to the zone l _{sträck} (Fig 1 & 2) between the two rollers, respectively between the roller and the film roll.

Furthermore, prior art solutions are described in US-A-4 458 467 and FR - 2 579 577, both of which utilize two stretch rollers. The construction of the pre stretcher does not allow sufficiently precise supervision of the stretch rate, when one wants to control elongation of the film. In the FR-publication even internal heating of the film during stretching is utilized, which considerably reduces the air tightness of the film.

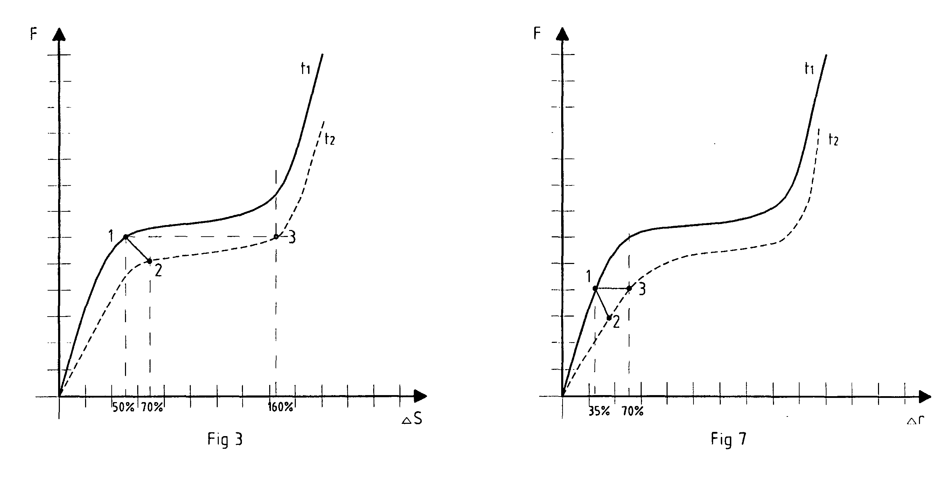

To be better able to understand what is happening in the film pre-stretcher- it is important to know how the elongation of the film depends on the force and the temperature. The diagram in Fig 3 shows the characteristic for a typical agricultural stretch film in principle. F = the stretch force of the film, Δ s = the elongation. The continuous curve shows the properties of the film at normal temperature, the dashed curve shows the properties of the film at increased temperature t₂. We can see from curve t₁ that up to about 70% stretch, the stretch force will increase steeply. After this the curve evens up;, we arrive at the "yield point of the film". Here the stretch of the film will increase up to about 160% with only a small increase in the film force. After 160% stretch, the film force will again increase steeply, this is known as the secondary stretch, where the film already has lost its "plastic memory", i.e. its capability of reverting to its original length.

When the film is stretched, heat is always generated due to the deformation of the plastic material. This will cause an increase in the temperature of the film. Particularly the yield point of the polythene based plastic films are strongly dependent on the temperature.

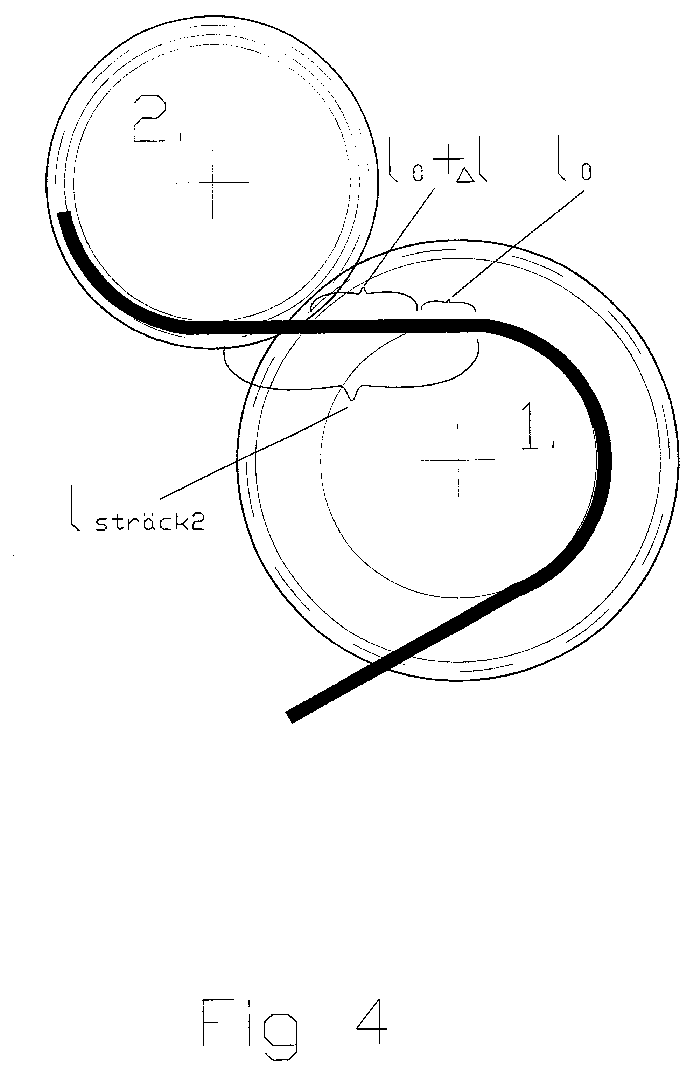

We follow a length unit of the film along its path through the pre-stretcher. As it loosens from the roller 1 in Fig 4 and enters the stretch area l_{sträck}, it will be elongated due to the difference in the peripheral speed between the roller 1 and roller 2. We can imagine that it will reach point 1 in the stretch diagram of Fig 3. At the same time the temperature of the film 1 ₀ will increase, and the yield point will decrease, which means that the film will partially soften. We can imagine the increase in the temperature such that the film will arrive at point 2 on stretch curve t₂. This will lead to a decrease in the film force and the film tension in the zone l_{sträck} between the rollers will decrease. As the film still is pulled forward and the difference in the distance covered by the film on the roller 1 and on the roller 2 respectively increases the film l ₀ will elongate more and we reach l ₀ + Δ I shown at point 3. Here the pre-stretch is so high that we will enter the zone of secondary stretch. Now the stretch force will again increase heavily and a new state of balance will occur when the stretch force for the already elongated part for the film at point 3 is equally high as the stretch force for the film that is loosening from the roller 1 but has not been heated yet. It means that the stretch forces in point 3 and point 1 are about equal. At this time a new length unit l₀₂ of the film will elongate, its temperature will increase, the film force will decrease, the film l₀₂ will elongate more until we reach l₀₂ + Δ l and point 3 in the tension diagram, etc. The scheme will be repeated as described above.

In practice this will be noticed in that the stretched film will have more or less regularly repeated vertical stripes, because the pre-stretch is not distributed evenly per length unit if the stretch is measured at the mm level. See e.g. the wrapper leaflets: Tanco Autowrap Eckig Ballenwickelgerte, and Parmiter TR 76 Bale Wrapper, where this phenomenon is seen clearly. It is clear that a film stretched in such an uneven way does not have the optimal possibility of recovering or the optimal air tightness.

Until now the tests carried out in different agricultural institutes have not taken this phenomenon into account. The stretch has always been measured on longer distances and so an average stretch has been obtained. See e.g. the tests carried out during summer 1996 at Ulvange forskningssenter in Norway. There the pre-stretch was measured by means of a measuring wheel, which registered the length of film used to wrap a standard bale; thus the measuring distance was approximately 80 meter. This is a measuring of the stretch at the macro level.

Another way used frequently for measuring the stretch is to measure a 10 cm distance on the surface of the film roll before the stretcher, and afterwards to control the distance between these points as the film is already pre-stretched on the bale.

These methods are too inexact for judging the evenness of pre-stretch in the film and thus its capability of keeping an even stretch in the best possible way so as to retain the tightness. However, they clearly show us the state of the art and the demands the present test institutes set on the film pre-stretchers of agricultural bale wrappers. s today.

To reach optimal air tightness for a wrapped bale and so optimal fodder quality, a pre-stretcher has been developed which is specified by means of the claims below.

The most important feature of the invention is that the film can receive a more even pre-stretch at the micro level. The film will then also keep its width better and the plastic molecules in the film will be more unidirectional as the pre-stretch will occur at a lower temperature.

A preferred embodiment of the invention will be described below with reference to the following drawings:
Fig 5 shows wrapping of a bale seen from above in principle.
Fig 6 shows the pre-stretcher of the wrapper seen from above.

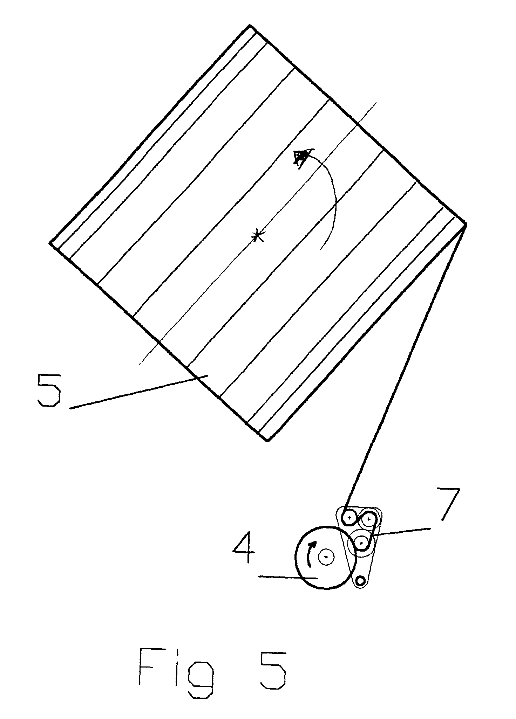

Fig 5 is a top view of the principle of the wrapping of a bale 5 with a film from a roll 4. Between the bale 5 and the film roll 6 is provided a pre-stretcher 7, which stretches the film to obtain a better tightness for the wraps around the bale 5.

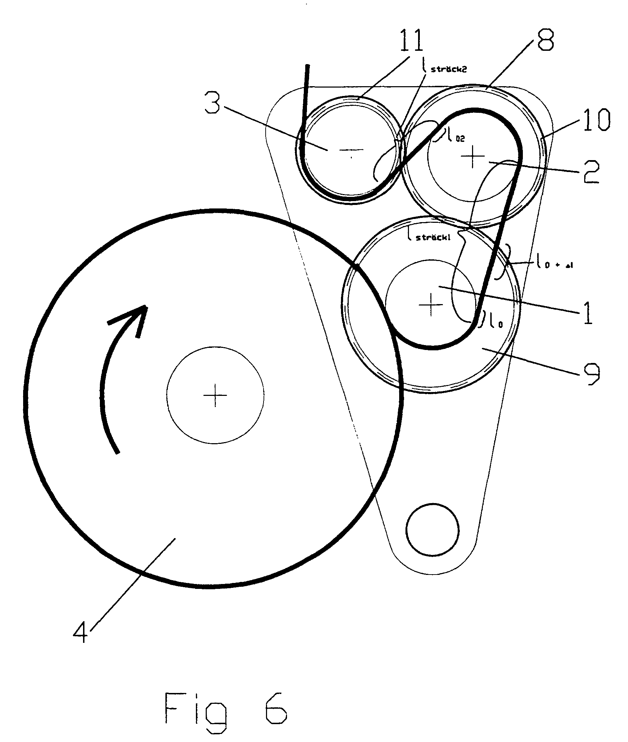

Fig 6 is a top view of the pre-stretcher 7 of the wrapping unit formed by a support for the film roll 4, stretch rollers 1,2 & 3 for the film, a transmission unit 8, in the figure formed by the gears 9,10 & 11, which determine the internal rotating speed differences between the rollers 1,2 & 3.

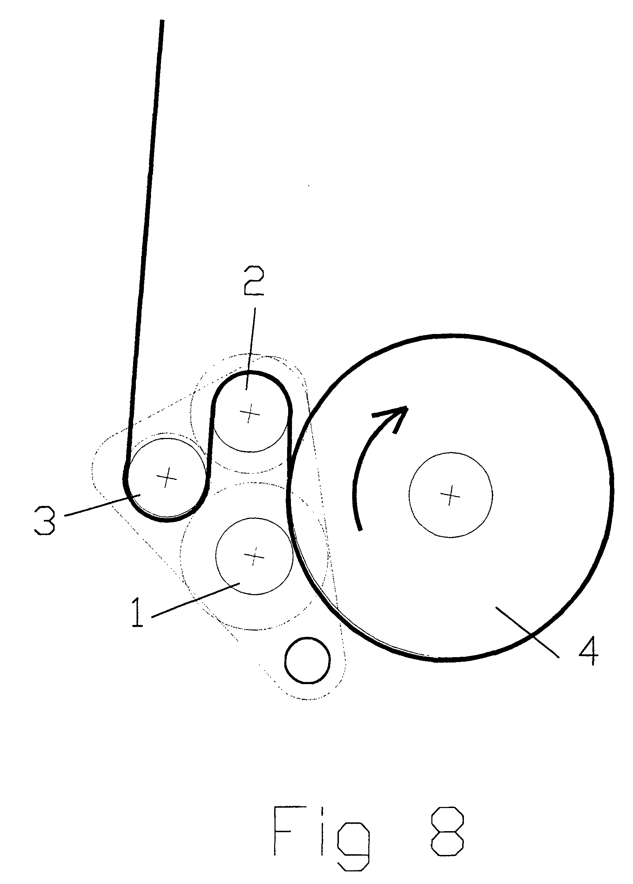

The film pre-stretcher according the invention will work as follows. As the length unit 1 ₀ of the film loosens from the roller 1, it arrives in the pre stretch zone l _{sträck 1} where it will be stretched to about half of the optimal pre-stretch for the film quality in question. As the peripheral speed difference between the roller 1 & 2 is small, the degree of pre-stretch at this first stage is low and thus the film will stay all the time in the linear part of the pre-stretch curve where the recovering capability of the film is at its best. As the pre-stretch in this first stage is low, only a small amount of heat will be generated and the characteristic film pre-stretch points 1,2 & 3 for that part of the film in the diagram of Fig 7 will stay all the time below the zone where the secondary stretch starts.

As the film is pulled further through the stretcher, the film part l₀ + Δ l will be cooled down, especially when it curves around the roller 2.

As the fill loosens from the roller 2 and enters the second pre-stretch zone l _{sträck 2} , it starts a new pre-stretch phase, where the film part l ₀ + Δ l that has cooled down has reached a tension strength which is at least at the level of the adjacent part of the film. A new pre-stretch phase will start where a new part of the film l ₀₂ starts to pre-stretch due to the peripheral speed difference between the rollers 2 & 3. As this speed difference is also relatively low, the pre-stretch for the length unit l ₀₂ will also be kept in the linear part of the pre-stretch curve in this secondary phase. Therefore the recovering capability of the film will remain at an optimal level while the air tightness of the film will remain as high as possible.

Another benefit of the film pre-stretcher according to the present invention is that the film width will be larger than in conventional pre-stretchers. The width will be better partly because the film stretch force will stay more even in a pre-stretcher according the invention. Therefore the film will be better tensioned to the stretch rollers, where the friction between the roller and the film will prevent the film from decreasing in width. Another explanation why the film width will remain better is that the film temperature in the stretch phase will stay constantly lower than in a pre-stretcher of the conventional type.

An additional benefit achieved by the use of a film pre-stretcher according to the invention is that film molecules will be more unidirectional due to the lower film temperature during the pre-stretch. This will result in a higher density and lower oxygen permeability of the film.

The invention is not limited to the above-described shape but numerous variations of it are possible within the scope of the patent claims below.

So, for example, the film can flow directly from the roller 4 to the stretch roller 2 as in the example of Fig 8. The film pre-stretcher can also be equipped with one or more guide rollers for the film, where the guide rollers are not connected to the transmission unit 8.

Further, one or more of the stretch rollers can be equipped with cooling devices to reduce the film temperature between the different stretch stages.

## Claims

1. A film pre-stretcher for an agricultural bale wrapper for feeding film from a roll (4) around a bale (5), the pre-stretcher comprising stretch rollers (1, 2, 3) connected with a transmission unit (8), the transmission unit determining the peripheral speed of each roller, the peripheral speed of a roller situated down streams along the path of the film being always higher than the peripheral speed of an up stream roller, **characterised in that**
- the pre-stretcher comprises three stretch rollers (1, 2, 3),
- the stretch rollers are separated by two pre-stretch zones between the rollers,
- the peripheral speed of each subsequent roller (1, 2, 3) ensures a pre-stretch in each separate stretch zone of the film fed by the rollers, and
- this pre-stretch is always kept below the yield point for the film.

2. A film pre-stretcher according claim 1, **characterised in that** a cooling zone applying improved cooling to the film fed into the pre-stretcher is situated between each pre-stretch zone.

3. A film pre-stretcher according claim 1 and 2, **characterised in that** a cooling device lowering the temperature of the stretch rollers (1, 2, 3) is applied to cool the film fed into the pre-stretcher..

## Patentansprüche

1. Folienstreckungsvorrichtung für eine landwirtschaftliche Ballenumwickelvorrichtung zum Vorschieben einer Folie von einer Rolle (4) um einen Ballen (5), welche Streckungsvorrichtung mit einer Transmissionseinheit (8) verbundene Streckungswalzen (1, 2, 3) aufweist, welche Transmissionseinheit die Umfangsgeschwindigkeit jeder Walze bestimmt, wobei die Umfangsgeschwindigkeit einer an der Folienbahn abwärts befindlichen Walze immer größer als die Umfangsgeschwindigkeit einer aufwärts befindlichen Walze ist, **dadurch gekennzeichnet, dass**
die Streckungsvorrichtung drei Streckungswalzen (1, 2, 3) aufweist,
die Streckungswalzen (1, 2, 3) durch zwei zwischen den Walzen befindliche Streckungsbereiche getrennt werden,
die Umfangsgeschwindigkeit jeder nachfolgenden Walze (1, 2, 3) eine Streckung in jedem separaten Streckungsbereich der mit den Walzen vorgeschobenen Folie gewährleistet und
diese Streckung immer unter der Fliessgrenze der Folie gehalten wird.

2. Folienstreckungsvorrichtung nach Anspruch 1, **dadurch gekennzeichnet, dass** sich eine Kühlzone, die eine verbesserte Abkühlung für die in die Streckungsvorrichtung vorgeschobene Folie bereitstellt, zwischen jedem Streckungsbereich befindet.

3. Folienstreckungsvorrichtung nach Anspruch 1 und 2, **dadurch gekennzeichnet, dass** eine die Temperatur der Streckungswalzen (1, 2, 3) senkende Kühlanlage angewandt wird, um die in die Streckungsvorrichtung vorgeschobene Folie zu kühlen.

## Revendications

1. Dispositif de pré-étirage de film pour une unité d'emballage utilisée en agriculture pour alimenter un film d'un rouleau (4) et l'enrouler autour d'une balle (5), le dispositif de pré-étirage comprenant des rouleaux d'étirage (1, 2, 3) reliés par une unité de transmission (8), l'unité de transmission déterminant la vitesse périphérique de chaque rouleau, la vitesse périphérique d'un rouleau situé en aval dans la direction du mouvement du film étant toujours plus grande que la vitesse d'un rouleau situé en amont, **caractérisé en ce que**
- le dispositif de pré-étirage comprend trois rouleaux d'étirage (1, 2, 3),
- les rouleaux d'étirage sont séparés par deux zones de pré-étirage disposées entre les rouleaux,
- la vitesse périphérique de chaque rouleau subséquent (1, 2, 3) assure un pré-étirage dans chaque zone d'étirage séparée du film alimenté par les rouleaux, et
- le pré-étirage est toujours maintenu sous le point de rupture du film.

2. Dispositif de pré-étirage de film selon la revendication 1, **caractérisé en ce que** entre chaque zone de pré-étirage il y a une zone de refroidissement pour effectuer un refroidissement amélioré du film alimenté dans le dispositif de pré-étirage.

3. Dispositif de pré-étirage de film selon la revendication 1 et 2, **caractérísé en ce qu'**un dispositif de refroidissement pour baisser la température des rouleaux d'étirage (1, 2, 3) est utilisé pour refroidir le film alimenté dans le dispositif de pré-étirage.
